Europäisches Patentamt

(19) European Patent Office

Office européen des brevets

(11) Numéro de publication: **0 207 837**
A1

## (12) DEMANDE DE BREVET EUROPEEN

(21) Numéro de dépôt: 86401239.8

(22) Date de dépôt: 09.06.86

(51) Int. Cl.⁴: **G 03 B 35/08**

(30) Priorité: 12.06.85 FR 8508885

(43) Date de publication de la demande:
07.01.87 Bulletin 87/2

(84) Etats contractants désignés:
CH DE GB IT LI

(71) Demandeur: **Cuvillier, Roger**
2bis, Avenue de la 1 Armée
F-21000 Dijon(FR)

(72) Inventeur: **Cuvillier, Roger**
2bis, Avenue de la 1 Armée
F-21000 Dijon(FR)

(74) Mandataire: **Martinet & Lapoux**
62, rue des Mathurins
F-75008 Paris(FR)

(54) **Appareil photographique pour prise de vues stéréoscopiques.**

(57) L'appareil (AP) comprend un support photosensible (SP) de deux images juxtaposées ($I_1$, $I_2$) de part et d'autre d'un plan de symétrie (XX'), deux premiers objectifs symétriques ($O_1$, $O_2$) axés perpendiculairement sur les centres des images ($I_1$, $I_2$) et distants d'une petite base stéréoscopique ($b_1$), et deux seconds objectifs symétriques ($O_3$, $O_4$) pour prise de vues avec une grande base stéréoscopique ($b_3$). Afin d'enregistrer un couple stéréoscopique toujours sur un même emplacement ($I_1$, $I_2$) du support de prérérence ayant les dimensions d'une diapositive standard, quelle que soit l'une des trois bases stéréoscopiques choisies ($b_1$, $b_2$, $b_3$), l'appareil comprend des moyens réfléchissants ($M_1$, $M_3$ ; $M_2$, $M_4$) pour focaliser le long des axes des premiers objectifs ($O_1$, $O_2$) des faisceaux optiques incidents ayant traversé les seconds objectifs ($O_3$ ; $O_4$). Les moyens réfléchissants peuvent comprendre deux miroirs centraux ($M_1$, $M_2$) réflecteurs pivotants ou semi-transparents fixes, et deux miroirs latéraux fixes ($M_3$, $M_4$).

./...

EP 0 207 837 A1

FIG. 3

0207837

- 1 -

<u>Appareil photographique pour</u>
<u>prise de vues stéréoscopiques</u>

La présente invention concerne, d'une manière générale, un appareil photographique permettant des prises de vues stéréoscopiques avec l'une des trois bases stéréoscopiques, à travers respectivement deux objectifs parmi quatre fixés à l'appareil.

Plus particulièrement la présente invention concerne un appareil photographique pour prise de vues stéréoscopiques comprenant un support photosensible de deux images juxtaposées disposées symétriquement par rapport à un plan de symétrie perpendiculaire au support, deux premiers chemins optiques perpendiculaires au support, passant par les centres des images et distants d'une petite base stéréoscopique, deux seconds chemins optiques symétriques par rapport audit plan de symétrie et incluant deux premiers tronçons optiques perpendiculaires au support et distants d'une grande base stéréoscopique, deux premiers objectifs axés sur les premiers chemins optiques, et deux seconds objectifs localisés sur les seconds chemins optiques, lesdites images étant situées sensiblement dans un plan focal image commun aux premiers et seconds objectifs.

Un tel appareil photographique à montures d'objectifs fixes, dans lequel les seconds objectifs ont des axes optiques colinéaires aux premiers tronçons optiques, est connu sous l'appelation NIMSLO 3D. Cet appareil peut enregistrer trois stéréogrammes pris respectivement avec trois bases stéréoscopiques constantes. Un premier stéréogramme est pris avec une petite base de 18 mm égale à la distance entre les premiers chemins optiques et est composé de premières images photographiées à travers les premiers objectifs. Un second stéréogramme est pris avec une base moyenne de 2x18 = 36 mm égale à la distance entre l'un des premiers chemins optiques et l'un des seconds chemins optiques de part et d'autre du plan de symétrie et est composé de deux secondes images photographiées avec les premier et second objectifs correspondants entre lesquelles une surface non impressionnée correspond à l'emplacement de l'une des premières images. Un troisième stéréogramme est pris avec une grande base de 3x18 = 54 mm égale à la distance entre les premiers tronçons optiques et est composé de deux troisièmes images photographiées à travers les seconds objectifs.

Quel que soit le stéréogramme choisi, il apparaît que celui-ci doit être compris dans une surface du support photosensible ayant une largeur égale au double de celle du format standard d'une diapositive de 24x36 mm$^2$. Ainsi avec une pellicule photographique pour 36 diapositives, seulement 18 stéréogrammes peuvent être impressionnés au moyen de l'appareil NIMSLO 3D.

En outre, pour transposer les stéréogrammes pris avec la base moyenne ou la grande base dans un cadre standard de diapositive en vue de projeter les stéréogrammes au moyen d'un appareil classique de projection de diapositives, une tireuse particulière doit être utilisée, ce qui augmente encore le coût de développement. Le tirage des stéréogrammes effectué d'après une épreuve originelle se traduit toujours par une perte de qualité, telle que netteté ou rendu des couleurs.

La présente invention vise à remédier aux inconvénients précités en fournissant un appareil photographique stéréoscopique au moyen duquel un couple stéréoscopique enregistré occupe toujours un même emplacement quelle que soit l'une de trois bases stéréoscopiques choisies. Lorsque cet emplacement est une surface égale à une diapositive standard, chaque stéréogramme est développé et monté par n'importe quel laboratoire photographique, comme pour une diapositive ordinaire et au même prix, sans faire appel à un quelconque tirage particulier, et est directement projetable.

A cette fin, un appareil photographique est tel que défini dans la revendication 1. D'une manière générale, l'invention propose d'utiliser quatre objectifs ayant des montures incorporées à l'appareil et offrant des axes optiques perpendiculaires deux à deux, et deux surfaces réfléchissantes fixes placées à 45° par rapport aux axes optiques et deux surfaces réfléchissantes pivotantes ou semi-réfléchissantes immobiles pour obtenir deux images juxtaposées quelle que soit la base stéréoscopique sélectionnée parmi trois.

Selon une première réalisation, les moyens réfléchissants comprennent deux premiers miroirs réflecteurs pivotants entre des premières positions externes aux premiers chemins optiques et des secondes positions inclinées à 45° par rapport aux premiers chemins optiques et centrées sur ceux-ci, et deux seconds miroirs réflecteurs fixes respectivement parallèles aux secondes positions des premiers miroirs et centrés sur les premiers tronçons optiques, et en ce que chacun des seconds objectifs est centré sur un second tronçon optique de l'un des seconds chemins optiques perpendiculaire aux premiers chemins optiques et passant respectivement par des centres de l'un des seconds miroirs et de l'un des premiers miroirs à la seconde position situés d'un même côté du plan de symétrie.

Selon une autre réalisation, les moyens réfléchissants comprennent deux premiers miroirs semi-transparents fixes, inclinés à 45° par rapport aux premiers chemins optiques et centrés sur ceux-ci, et deux seconds miroirs réflecteurs fixes respectivement parallèles aux premiers miroirs et centrés sur les premiers tronçons optiques, et en ce que chacun des seconds objectifs est centré sur un second tronçon optique de l'un des seconds chemins optiques perpendiculaire aux premiers chemins optiques et passant respectivement par les centres de l'un des seconds miroirs et de l'un des premiers miroirs situés d'un même côté du plan de symétrie.

Ainsi, grâce à un report des seconds chemins optiques vers les premiers chemins optiques via les miroirs, un stéréogramme est enregistré sur un même emplacement d'images quelle que soit la base stéréoscopique choisie.

Selon une autre caractéristique de l'invention, l'appareil comprend des moyens, sur une face avant de l'appareil pour recevoir une lentille convergente amovible disposée devant les premiers objectifs. La lentille convergente constitue une bonnette unique, coiffant les deux premiers objectifs rapprochés et fixes, correspondant à la petite base stéréoscopique.

L'emploi de la petite base est recommandé pour des prises de vue de sujets très rapprochés de l'appareil, si la distance du sujet est faible, entre 10 et 20 fois la petite base, puisque, dans ce cas, les images données directement par les deux premiers objectifs ne sont pas sensiblement centrées sur les axes optiques

- 4 -

de ces derniers constitués par les premiers chemins optiques. Ceci entraîne une difficulté de fusionnement des deux images lors de l'observation du couple d'image. En outre l'apport de la bonnette est facilitée aussi par le faible écartement des premiers objectifs et leur position rigide.

D'autres caractéristiques et avantages de l'invention apparaîtront plus clairement à la lecture de la description suivante de plusieurs réalisation préférées de l'invention en référence aux dessins annexés correspondants, dans lesquels :

- la Fig.1 est une vue de dessus schématique de l'intérieur d'un appareil photographique stéréoscopique selon l'invention, dans lequel des premiers miroirs pivotables sont positionnés pour une prise de vue avec petite base stéréoscopique ;

- la Fig.2 est une vue de face schématique de l'appareil muni d'une bonnette centrale amovible à lentille convergente placée devant deux premiers objectifs de l'appareil, ou pourvu de premiers objectifs à déplacements axiaux ;

- la Fig.3 est une vue de dessus schématique de l'intérieur de l'appareil dans lequel les premiers miroirs sont positionnés pour une prise de vue avec grande base stéréoscopique ;

- la Fig.4 est une vue de dessus schématique de l'intérieur de l'appareil dans lequel les premiers miroirs sont positionnés pour une prise de vue avec base stéréoscopique moyenne ; et

- la Fig.5 est une vue de dessous schématique de l'extérieur de l'appareil.

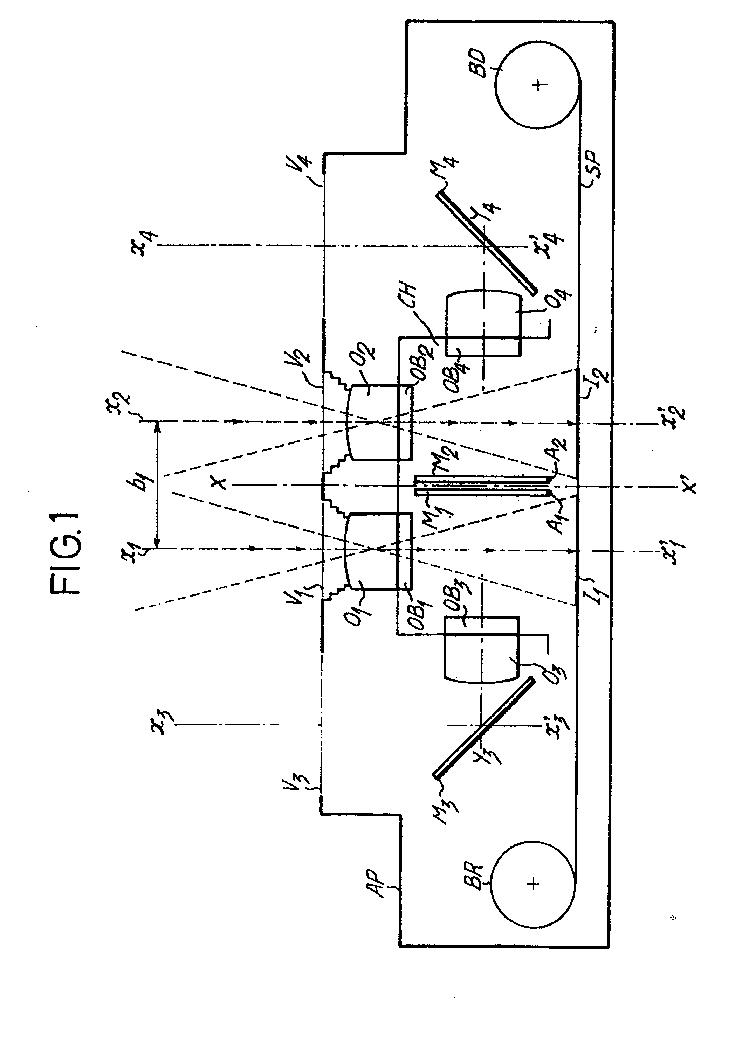

En référence à la Fig.1, un système optique stéréoscopique inclus au moins en partie dans une chambre noire CH d'un appareil photographique AP est symétrique par rapport à un plan transversal vertical ayant pour trace XX' dans les Figs.1, 3 et 4, perpendiculaire à un support photosensible SP disposé au fond de la chambre noire. Le support photosensible est une pellicule photographique déroulée longitudinalement dans un plan image vertical entre une bobine débitrice BD et une bobine réceptrice BR. Le système optique offre deux premiers chemins optiques rectilignes symétriques et deux seconds chemins optiques symétriques entre des orifices circulaires de visée respectifs $V_1$ à $V_4$ pratiqués dans une paroi avant de l'appareil et deux surfaces d'images monoscopiques

symétriques $I_1$ et $I_2$ juxtaposées sur le support SP. Les quatre chemins optiques sont disposés dans un plan horizontal coplanaire à l'axe longitudinal de déroulement du support SP.

Les premiers chemins optiques sont définis par des axes optiques horizontaux $x_1x'_1$ et $x_2x'_2$ de deux premiers objectifs $O_1$ et $O_2$ passant par des centres des orifices symétriques $V_1$ et $V_2$ et des surfaces d'images $I_1$ et $I_2$ respectivement, et perpendiculaires au support SP. Les objectifs $O_1$ et $O_2$ sont incorporés à l'appareil, et peuvent être sensiblement en retrait de la face avant de l'appareil AP. Les centres optiques des objectifs $O_1$ et $O_2$ sont séparés d'une distance égale à une petite base stéréoscopique $b_1$. Entre les objectifs $O_1$ et $O_2$ et les surfaces d'image $I_1$ et $I_2$ sont prévus deux premiers miroirs plans verticaux totalement réflecteurs $M_1$ et $M_2$ qui sont pivotables autour d'axes verticaux respectifs $A_1$ et $A_2$ à proximité du plan XX' et offrant un débattement de 45° chacun. Lorsque les miroirs $M_1$ et $M_2$ sont à des premières positions parallèles au plan XX' pour dégager complètement les premiers chemins optiques $x_1x'_1$ et $x_2x'_2$, comme montré à la Fig.1, les deux objectifs $O_1$ et $O_2$ focalisent directement dans le plan du support SP deux images juxtaposées $I_1$ et $I_2$ formant un couple stéréoscopique d'un objet photographié pris avec la petite base $b_1$.

Les premiers objectifs $O_1$ et $O_2$, éloignés d'une distance égale à la petite base stéréoscopique $b_1$, étant normalement destinés à une prise de vue stéréoscopique d'objets rapprochés, et le support photosensible SP étant situé dans le plan focal des objectifs conjugué de plans objets proches de l'infini, il est nécessaire de pourvoir les objectifs $O_1$ et $O_2$ de moyens de mise au point sur les objets rapprochés.

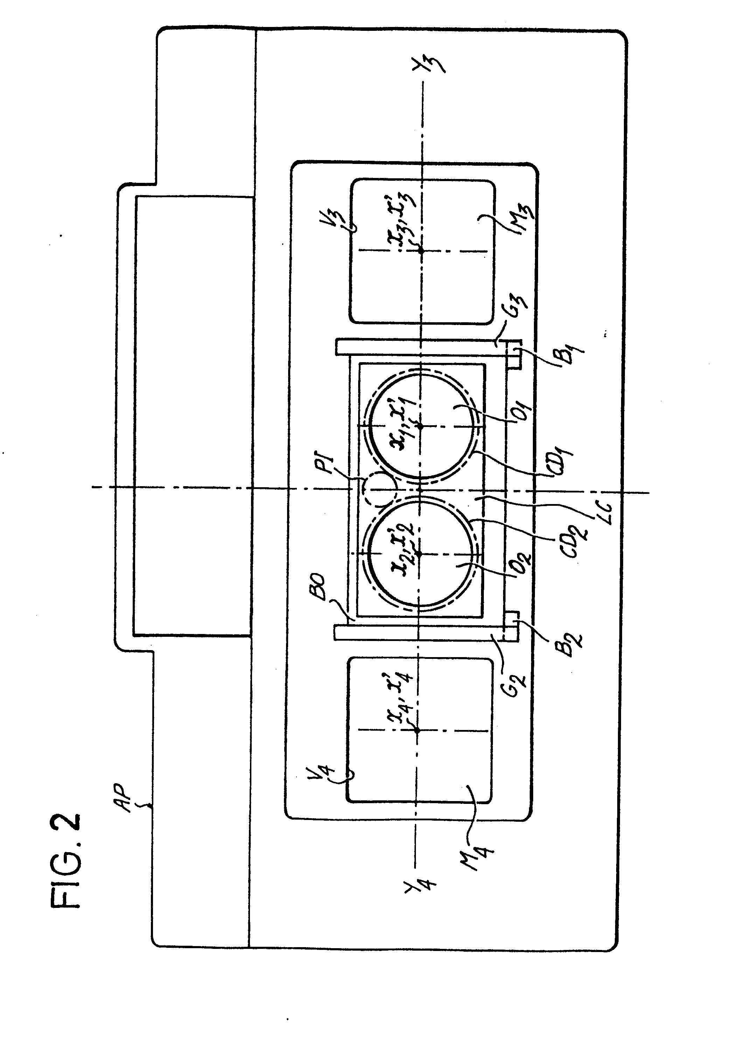

A cet effet, l'appareil reçoit de préférence une bonnette BO couvrant les champs des deux objectifs $O_1$ et $O_2$. En plus du réglage de la mise au point sur l'objet situé dans le plan focal de la bonnette, les moyens de mise au point assurent un centrage des images sur les axes optiques $x_1x'_1$ et $x_2x'_2$ des objectifs $O_1$ et $O_2$. Comme montré à la Fig.2, la bonnette BO est un cadre rectangulaire amovible comprenant une lentille convergente LC. Deux glissières symétriques $G_1$ et $G_2$ entre lesquelles est montée à coulissement vertical la bonnette BO, sont fixées sur la face avant de l'appareil, pratiquement à mi-distance des axes $x_1x'_1$ et $x_3x'_3$ et des axes $x_2x'_2$ et $x_4x'_4$. Des butées $B_1$ et $B_2$ à des extrémités inférieures des glissières $G_1$ et $G_2$ retiennent la bonnette BO enfilée par le dessus, et centre la lentille LC par rapport au plan des axes $x_1x'_1$ et $x_2x'_2$. La lentille convergente LC est une lentille plan-convexe ayant un dioptre convexe orienté à l'opposé des objectifs $O_1$ et $O_2$ et offrant une puissance choisie en fonction de la distance à l'objet à photographier afin de modifier la distance focale des objectifs $O_1$ et $O_2$.

Selon une autre réalisation, la mise au point sur les objets rapprochés peut être effectuée par des déplacements axiaux associés des premiers objectifs $O_1$ et $O_2$. Par exemple, chacun de deux moyens de mise au point est réalisé grâce à un filetage externe d'une monture cylindrique de l'objectif $O_1$, $O_2$, coopérant avec un taraudage d'un alésage pratiqué dans la paroi avant de l'appareil. Un vissage ou dévissage de la monture de l'objectif $O_1$, $O_2$ produit une translation de l'objectif le long de son axe optique $x_1x'_1$, $x_2x'_2$ et modifie ainsi la mise au point en fonction de la distance à l'objet photographié.

Les mises au point des deux premiers objectifs $O_1$ et $O_2$ sont synchronisées par exemple au moyen d'un petit pignon central PI tournant manuellement autour d'un axe horizontal situé dans le plan de symétrie XX' et coopérant avec deux couronnes dentées $CD_1$ et $CD_2$ fixées autour des montures des objectifs respectifs $O_1$ et $O_2$, comme montré à la Fig.2 ; dans ce cas, les filetages des montures des objectifs sont de même sens, à gauche ou à droite.

Selon une autre variante, la synchronisation des mises au point des objectifs $O_1$ et $O_2$ est réalisée par deux couronnes dentées $CD_1$ et $CD_2$ entourant les montures des objectifs et engrenant l'une dans l'autre au niveau du plan de symétrie XX' ; dans ce cas les filetages des montures des objectifs sont de sens contraires, l'un à gauche et l'autre à droite.

Selon encore une autre variante, la mise au point des objectifs $O_1$ et $O_2$ est réalisée automatiquement sur l'objet occupant une position centrale du champ de visée grâce à un dispositif connu sous l'appellation "autofocus".

Les seconds chemins optiques sont composés chacun de trois tronçons horizontaux.

Un premier tronçon d'un second chemin optique est défini par un axe optique incident $x_3x'_3$, $x_4x'_4$ entre un centre de l'orifice $V_3$, $V_4$ et un centre d'un second miroir plan vertical fixe, totalement réflecteur $M_3$, $M_4$. Les premiers tronçons sont parallèles et coplanaires aux axes optiques $x_1x'_1$ et $x_2x'_2$ et sont distants d'une grande base stéréoscopique $b_3$. Les miroirs $M_3$ et $M_4$ sont disposés dans des plans perpendiculaires entre eux et offrent des surfaces réfléchissantes inclinées à 45° par rapport aux axes $x_3x'_3$ et $x_4x'_4$ et orientées vers la paroi avant de l'appareil et le plan XX'.

Des seconds tronçons des seconds chemins optiques sont colinéaires à un axe optique horizontal $Y_3Y_4$ perpendiculaire aux axes $x_1x'_1$ et $x_2x'_2$ et sont situés chacun entre le centre d'un miroir fixe respectif $M_3$, $M_4$ et l'axe respectif $x_1x'_1$, $x_2x'_2$. Les seconds tronçons transmettent des faisceaux optiques incidents traversant les orifices $V_3$ et $V_4$ et réfléchis par les miroirs $M_3$ et $M_4$. Dans les seconds tronçons sont interposés des seconds objectifs symétriques $O_3$ et $O_4$ ayant pour axe optique commun, l'axe $Y_3Y_4$. Les objectifs $O_3$ et $O_4$ sont fixés dans l'appareil.

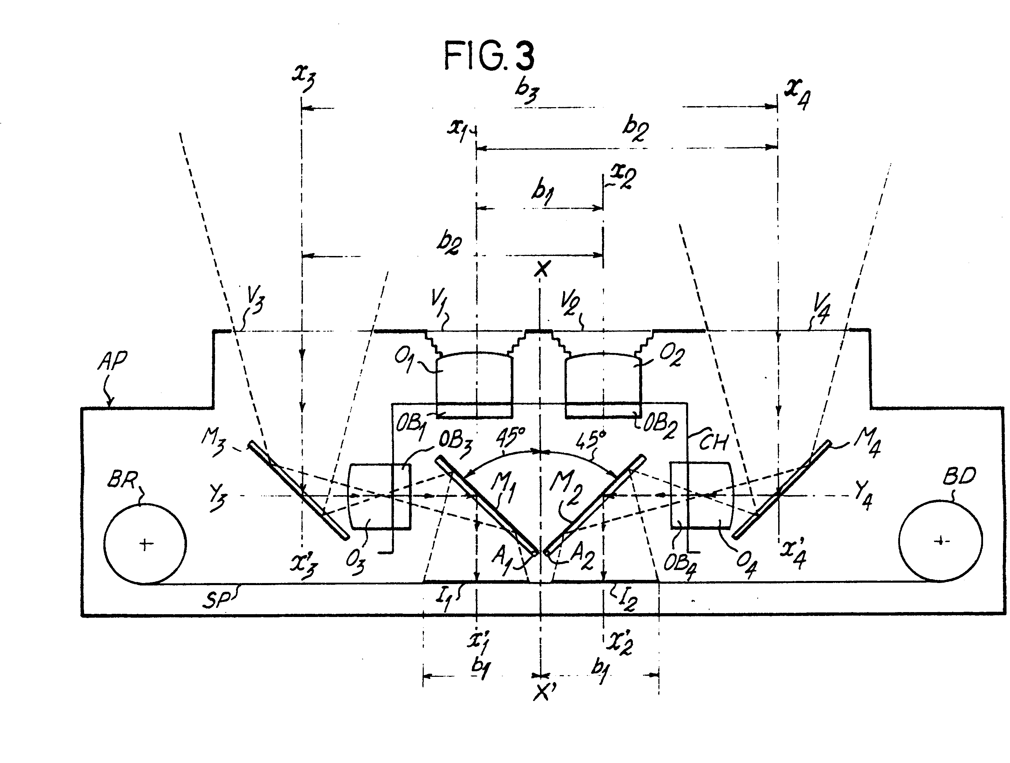

Des troisièmes tronçons des seconds chemins optiques sont définis par des segments des axes parallèles $x_1x'_1$ et $x_2x'_2$ compris entre l'axe $Y_3Y_4$ et les centres des surfaces d'images $I_1$ et $I_2$, et plus précisemment, les troisièmes tronçons sont situés entre les centres des surfaces d'images $l_1$ et $l_2$ et des centres des premiers miroirs $M_1$ et $M_2$ lorsque les miroirs $M_1$ et $M_2$ sont à des secondes positions perpendiculaires entre elles afin que leurs surfaces réfléchissantes soient respectivement parallèles et en vis-à-vis des surfaces réfléchissantes des seconds miroirs $M_3$ et $M_4$, comme montré à la Fig.3. A ces secondes positions, les miroirs $M_1$ et $M_2$ occultent des faisceaux optiques incidents traversant les premiers objectifs immobiles $O_1$ et $O_2$ et réfléchissent les faisceaux réfléchis par les seconds miroirs $M_3$ et $M_4$ et traversant les seconds objectifs immobiles $O_3$ et $O_4$ afin d'impressionner le support photosensible SP par un couple stéréoscopique $I_1+I_2$ pris avec la grande base $b_3$.

- 8 -

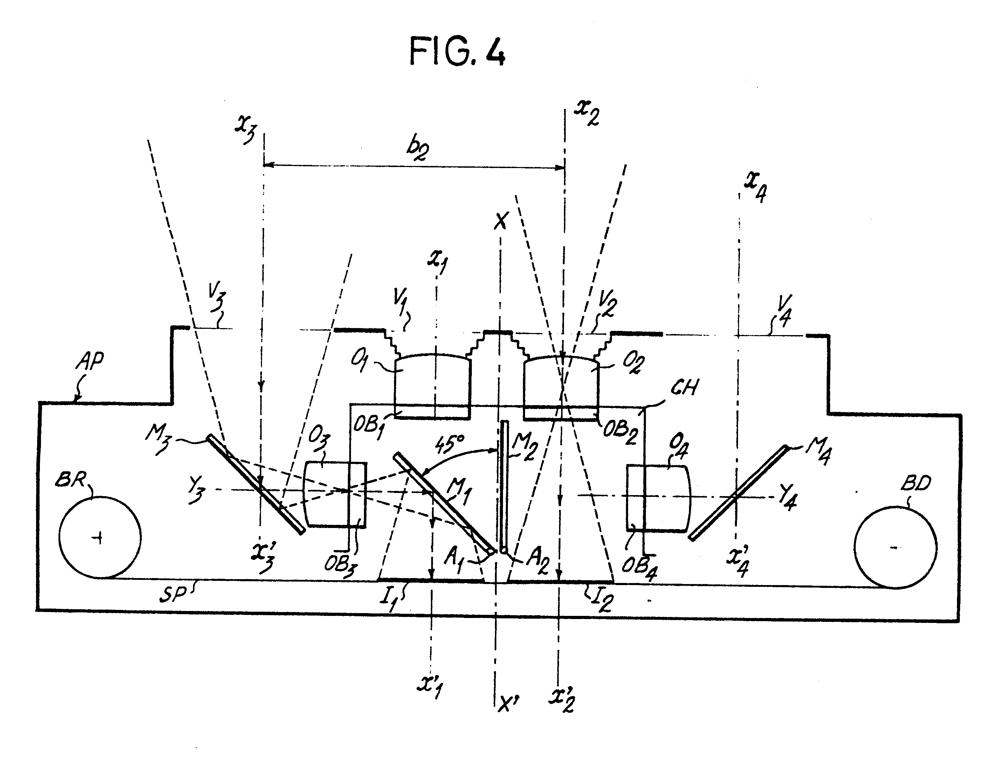

L'écartement entre les axes $x_1x'_1$ et $x_4x'_4$ et l'écartement entre les axes $x_2x'_2$ et $x_3x'_3$ sont égaux à une base stéréoscopique moyenne $b_2 = (b_1+b_3)/2$. Comme montré à la Fig.4, lorsque l'un des premiers miroirs, tel que le miroir $M_2$ est positionné parallèlement au plan de symétrie XX', et l'autre premier miroir, tel que le miroir $M_1$, est incliné à 45° par rapport à l'axe $x_1x'_1$, un stéréogramme $I_1+I_2$ est pris avec la base moyenne $b_2$ et est composé d'une image $I_2$ projetée par le premier objectif $O_2$ dont l'axe optique $x_2x'_2$ est dégagé par le miroir positionné parallèlement $M_2$ et d'une image $I_1$ projetée par le second objectif $O_3$ via le premier miroir incliné $M_1$. Une prise de vue stéréoscopique avec la base moyenne $b_2$ est donc obtenue en utilisant l'un des premiers chemins optiques, tel que le chemin $x_2x'_2$, et l'un des seconds chemins optiques, tel que le chemin $x_3x'_3 + Y_3Y_4 + x_1x'_1$, situé de l'autre côté du plan de symétrie XX' par rapport au premier chemin optique $x_2x'_2$.

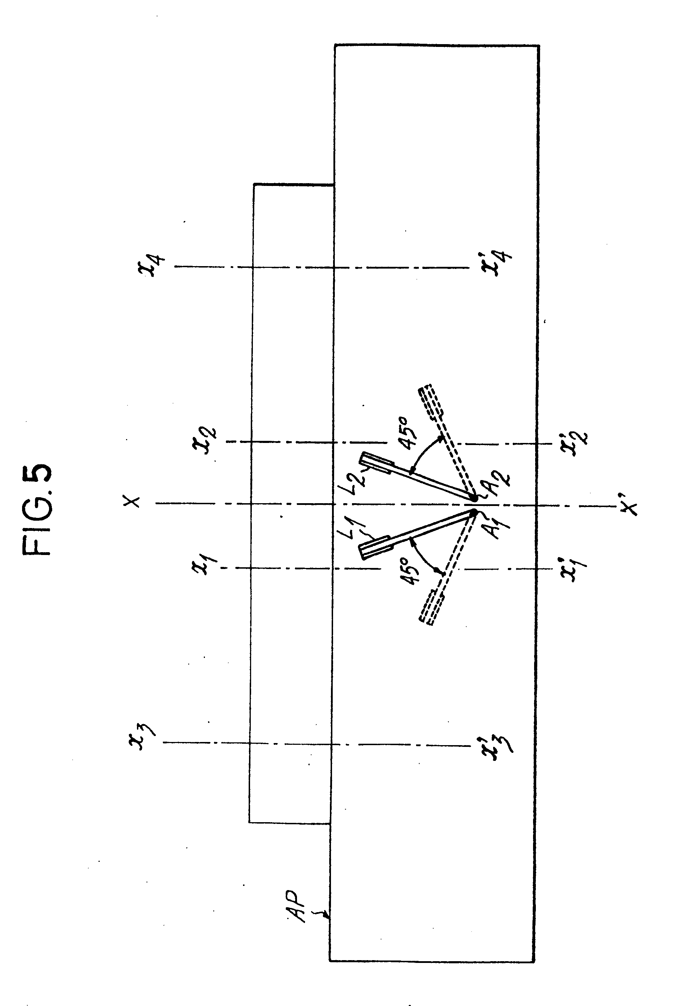

Comme montré à la Fig.5, des rotations individuelles des premiers miroirs $M_1$ et $M_2$ ayant des débattements circulaires de 45° limités par des butées internes à l'appareil sont obtenues respectivement au moyen de deux petits leviers horizontaux $L_1$ et $L_2$ localisés sur le dessous du boîtier de l'appareil AP et solidaires des axes $A_1$ et $A_2$. De tels moyens de préhension pour pivoter les miroirs $M_1$ et $M_2$ uniquement, indépendamment l'un de l'autre, par rapport aux objectifs $O_1$, $O_3$ et $O_2$, $O_4$ immobiles, sont compatibles avec la précision requise pour impressionner le support photosensible SP par deux vues juxtaposées correctement.

Les longueurs optiques le long des premiers chemins optiques entre les centres optiques des premiers objectifs $O_1$ et $O_2$ et les centres des images $I_1$ et $I_2$, et les longueurs optiques le long des seconds chemins optiques entre les centres optiques des seconds objectifs $O_3$ et $O_4$ et les centres des images $I_1$ et $I_2$ sont égales à la distance focale identique des objectifs $O_1$ à $O_4$.

Selon une réalisation préférée, la distance focale des objectifs $O_1$ à $O_4$ est égale à 30 mm pour correspondre à un champ normal. Cette courte distance focale assure par ailleurs une profondeur de champ qui autorise des objectifs à mise au point fixe réglée sur la distance hyperfocale. Les surfaces des images $I_1$ et

$I_2$ constituent un stéréogramme au format standard 24x36 $mm^2$, comportant deux images monoscopiques rectangulaires ayant chacune une largeur de 18 mm et une hauteur de 24 mm et ayant des centres séparés de 18 mm. Dans ce cas, la petite base $b_1$ est égale à 18 mm. La grande base $b_3$ est par exemple de 70 mm, et donc la base moyenne $b_2$ est égale à (70 + 18)/2 = 44 mm. Quelle que soit la base sélectionnée au moyen des leviers $L_1$ et $L_2$ positionnant les premiers miroirs $M_1$ et $M_2$, le stéréogramme est inscrit dans le format 24x36 $mm^2$ d'une diapositive directement encastrable dans un cadre standard de 50x50 $mm^2$ et projetable avec un projecteur de diapositive.

La petite base $b_1$ = 18 mm est sélectionnée pour de la macrophotographie avec bonnette, c'est-à-dire pratiquement pour des prises de vues d'objets distants de 1 m à 25 cm. La base moyenne $b_2$ = 44 mm est choisie pour tout sujet à photographier en plan moyen entre 1 et 3 m, tel qu'une scène d'intérieur au flash. La grande base $b_3$ = 70 mm est choisie pour tout sujet à photographier, tel que paysage, distant de 3 m à l'infini, avec perception sensible de la profondeur même dans les lointains.

Selon d'autres variantes, le stéréogramme comprend deux images, chacune de 7,5x10 $cm^2$, et occupe une surface standard de 10x15 $cm^2$ d'une pellicule d'images en couleurs.

Selon une seconde réalisation, les premiers miroirs $M_1$ et $M_2$ ne pivotent plus autour des axes $A_1$ et $A_2$, mais sont fixés à des positions inclinées à 45° par rapport aux axes $x_1x'_1$ et $x_2x'_2$, comme montré à la Fig.3. Les miroirs $M_1$ et $M_2$ ne sont plus totalement réflecteurs, mais sont constitués chacun par une lame semi-transparente, ou dite semi-réfléchissante. Les objectifs $O_1$ et $O_2$ et les objectifs $O_3$ et $O_4$ forment encore simultanément des images respectives $I_1$ et $I_2$ aux mêmes emplacements sur le support photosensible SP.

Particulièrement pour la seconde réalisation, le choix de base stéréoscopique est effectué par un dispositif commandant simultanément deux obturateurs sélectionnés parmi quatre $OB_1$ à $OB_4$ équipant les objectifs $O_1$ à $O_4$. La petite base $b_1$ est sélectionnée en ouvrant les obturateurs $OB_1$ et $OB_2$ associés aux objectifs $O_1$ et $O_2$ et en fermant les obturateurs $OB_3$ et $OB_4$ associés aux objectifs

$O_3$ et $O_4$ ; la base moyenne $b_2$ est sélectionnée en ouvrant les obturateurs $OB_2$ et $OB_3$, ou $OB_1$ et $OB_4$, et en fermant les deux autres obturateurs $OB_1$ et $OB_4$ ou $OB_2$ et $OB_3$. La grande base $b_3$ est sélectionnée en ouvrant les seconds obturateurs $OB_3$ et $OB_4$ et en fermant les premiers obturateurs $OB_1$ et $OB_2$. Les obturateurs peuvent être mécaniques tels que diaphragmes, ou de préférence, opto-électroniques, tels que des obturateurs à verre photochrome ou à cristaux liquides, commandés électroniquement. Dans ce dernier cas la base stéréoscopique sélectionnée est affichée dans un viseur de l'appareil AP.

REVENDICATIONS

1 - Appareil photographique pour prise de vues stéréoscopiques (AP) comprenant un support photosensible (SP) de deux images juxtaposées ($I_1$, $I_2$) disposées symétriquement par rapport à un plan de symétrie (XX') perpendiculaire au support, deux premiers chemins optiques ($x_1x'_1$, $x_2x'_2$) perpendiculaires au support (SP), passant par des centres des images ($I_1$, $I_2$) et distants d'une petite base stéréoscopique ($b_1$), deux seconds chemins optiques symétriques par rapport audit plan de symétrie (XX') et incluant deux premiers tronçons optiques ($x_3x'_3$, $x_4x'_4$) perpendiculaires au support (SP) et distants d'une grande base stéréoscopique ($b_3$), deux premiers objectifs ($O_1$, $O_2$) axés sur les premiers chemins optiques ($x_1x'_1$, $x_2x'_2$), et deux seconds objectifs ($O_3$, $O_4$) localisés sur les seconds chemins optiques, lesdites images ($I_1$, $I_2$) étant situées sensiblement dans un plan focal image commun aux premiers et seconds objectifs ($O_1$ à $O_4$), caractérisé en ce que les seconds chemins optiques ($x_3x'_3$, $Y_3Y_4$, $x_1x'_1$ ; $x_4x'_4$, $Y_4Y_3$, $x_1x'_1$) comprennent des moyens réfléchissants ($M_1$, $M_3$ ; $M_2$, $M_4$) pour focaliser des faisceaux optiques incidents le long des premiers tronçons optiques ($x_3x'_3$, $x_4x'_4$) et traversant les seconds objectifs ($O_3$ ; $O_4$) en lesdites deux images juxtaposées ($I_1$, $I_2$).

2 - Appareil photographique conforme à la revendication 1, caractérisé en ce que les moyens réfléchissants comprennent deux premiers miroirs réflecteurs ($M_1$, $M_2$) pivotants entre des premières positions (Fig.1) externes aux premiers chemins optiques ($x_1x'_1$, $x_2x'_2$) et des secondes positions (Fig.3) inclinées à 45° par rapport aux premiers chemins optiques ($x_1x'_1$, $x_2x'_2$) et centrées sur ceux-ci, et deux seconds miroirs réflecteurs fixes ($M_3$, $M_4$) respectivement parallèles aux secondes positions des premiers miroirs ($M_1$, $M_2$) et centrés sur les premiers tronçons optiques ($x_3x'_3$, $x_4x'_4$), et en ce que chacun des seconds objectifs ($O_3$, $O_4$) est centré sur un second tronçon optique ($Y_3$, $Y_4$) de l'un des seconds chemins optiques perpendiculaire aux premiers chemins optiques ($x_1x'_1$, $x_2x'_2$) et passant respectivement par des centres de l'un des seconds miroirs ($M_3$, $M_4$) et de l'un des premiers miroirs ($M_1$, $M_2$) à la seconde position situés d'un même côté du plan de symétrie (XX').

3 - Appareil photographique conforme à la revendication 2, caractérisé en ce que les premières positions parallèles (Fig.1) des premiers miroirs ($M_1$, $M_2$) sont à proximité du plan de symétrie (XX').

4 - Appareil photographique conforme à la revendication 2 ou 3, caractérisé en ce qu'il comprend deux moyens de préhension ($L_1$, $L_2$) externes à l'appareil pour pivoter respectivement et individuellement les deux premiers miroirs ($M_1$, $M_2$) autour d'axes ($A_1$, $A_2$) perpendiculaires aux premiers chemins optiques ($x_1x'_1$, $x_2x'_2$).

5 - Appareil photographique conforme à la revendication 1, caractérisé en ce que les moyens réfléchissants comprennent deux premiers miroirs semi-transparents fixes ($M_1$, $M_2$), inclinés à 45° par rapport aux premiers chemins optiques ($x_1x'_1$, $x_2x'_2$) et centrés sur ceux-ci, et deux seconds miroirs réflecteurs fixes ($M_3$, $M_4$) respectivement parallèles aux premiers miroirs ($M_1$, $M_2$) et centrés sur les premiers tronçons optiques ($x_3x'_3$, $x_4x'_4$), et en ce que chacun des seconds objectifs ($O_3$, $O_4$) est centré sur un second tronçon optique ($Y_3$, $Y_4$) de l'un des seconds chemins optiques perpendiculaire aux premiers chemins optiques ($x_1x'_1$, $x_2x'_2$) et passant respectivement par des centres de l'un des seconds miroirs ($M_3$, $M_4$) et de l'un des premiers miroirs ($M_1$, $M_2$) situés d'un même côté du plan de symétrie (XX').

6 - Appareil conforme à l'une quelconque des revendications 1 à 5, caractérisé en ce qu'il comprend des moyens ($G_1$, $G_2$, $B_1$, $B_2$) sur une face avant de l'appareil pour recevoir une lentille convergente amovible (BO, LC) disposée devant les premiers objectifs ($O_1$, $O_2$).

7 - Appareil photographique conforme à l'une quelconque des revendications 1 à 6, caractérisé en ce qu'il comprend des moyens ($CD_1$, $CD_2$) pour mettre au point en synchronisme les premiers objectifs ($O_1$, $O_2$).

8 - Appareil photographique conforme à la revendication 7, caractérisé en ce que les moyens pour mettre au point comprennent deux couronnes dentées ($CD_1$, $CD_2$) montées autour de montures des premiers objectifs ($O_1$, $O_2$) vissées dans l'appareil, les couronnes coopérant avec un pignon ($P_1$) et les filetages des montures étant

0207837

- 13 -

de même sens, ou les couronnes s'engrenant mutuellement et les filetages des montures étant de sens contraires.

9 - Appareil photographique conforme à l'une quelconque des revendications 1 à 8, caractérisé en ce qu'il comprend quatre moyens d'obturation ($OB_1$ à $OB_4$) associés respectivement aux quatre objectifs ($O_1$ à $O_4$) et des moyens pour commander simultanément l'ouverture des deux moyens d'obturation ($OB_1$, $OB_2$) associés aux premiers objectifs ($O_1$, $O_2$) et la fermeture des deux moyens d'obturation ($OB_3$, $OB_4$) associés aux seconds objectifs ($O_3$, $O_4$), l'ouverture des deux moyens d'obturation ($OB_2$, $OB_3$) associés à l'un des premiers objectifs ($O_1$, $O_2$) et à l'un des seconds objectifs ($O_3$, $O_4$) et la fermeture des deux autres moyens d'obturation ($OB_1$, $OB_4$), et l'ouverture des moyens d'obturation ($OB_3$, $OB_4$) associés aux seconds objectifs ($O_3$, $O_4$) et la fermeture des moyens d'obturation ($OB_4$, $OB_2$) associés aux premiers objectifs ($O_1$, $O_2$).

10 - Appareil photographique conforme à l'une quelconque des revendications 1 à 9, caractérisé en ce que les petite et grande bases ($b_1$, $b_3$) sont égales à 18 mm et 70 mm respectivement.

FIG.1

FIG. 2

2/5

0207837

FIG.3

# FIG. 4

0207837

# FIG.5

Office européen
des brevets

**RAPPORT DE RECHERCHE EUROPEENNE**

0207837
Numéro de la demande

EP 86 40 1239

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A- 879 533 (ZEISS IKON AG)<br><br>* En entier *<br><br>--- | 1,4,5,<br>7,9 | G 03 B 35/08 |
| A | FR-A-2 547 432 (CUVILLIER)<br>* Page 7, lignes 33-35; figure 2 *<br><br>--- | 8,10 | |
| A | CH-A- 249 391 (OPTIKOTECHNA)<br>* Figure 2 *<br><br>--- | 1 | |
| A | US-A-2 794 380 (REHORN)<br>* Figure 1 *<br><br>----- | 1 | |

**DOMAINES TECHNIQUES RECHERCHES (Int. Cl.4)**

G 03 B 35/08
G 03 B 35/10

Le présent rapport de recherche a été établi pour toutes les revendications

| Lieu de la recherche | Date d'achèvement de la recherche | Examinateur |
|---|---|---|
| LA HAYE | 29-09-1986 | MEES G. |